Europäisches Patentamt

European Patent Office

Office européen des brevets

(19)

(11) **EP 1 432 161 A2**

(12) **EUROPEAN PATENT APPLICATION**

(43) Date of publication:
23.06.2004 Bulletin 2004/26

(51) Int Cl.⁷: **H04J 3/06**

(21) Application number: **03104140.3**

(22) Date of filing: **10.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.12.2002 GB 0229648**

(71) Applicant: **Zarlink Semiconductor Limited**
**Swindon, Wiltshire SN2 2QW (GB)**

(72) Inventors:
• **YING, Thomas Man Yin**
**SN25 4ZR, Swindon (GB)**
• **CUDMORE, Peter Wayne**
**SN2 8BS, Swindon (GB)**

(74) Representative: **Robinson, John Stuart**
**Marks & Clerk,**
**4220 Nash Court,**
**Oxford Business Park South**
**Oxford OX4 2RU (GB)**

(54) **Method and apparatus for recovering a reference clock**

(57)     An apparatus (21) is provided for recovering a reference clock generated by a master clock (22) in a sender (20). The sender (20) sends timing packets over a network (3). The apparatus comprises a controllable slave clock (27) and a control circuit (25, 26, 28) which determines the frequency drift between the master clock and the slave clock and controls the slave clock (27) so as to reduce the drift. The error is determined as a function of $(r \times m \times N) - C'_a(n + r \times m)$,
where

$$C'_a(n) = \left( \sum_{i=0}^{q-1} C'(n-i) \right) / q .$$

N is the number of cycles of the master clock between the sending of consecutive timing information items, C'(s) is the number of slave clock cycles between receipt of the (s-rm)th and sth timing information items from the network, m is an integer greater than 0, q is an integer greater than 1, and r is a non-negative integer representing the order of the drift determination.

Master reference oscillator — *fm* → Counter — 23

Master unit — 22 — 20 — CES timing packet generator — 24

CES timing packets over packet network — 3

FIG 2

28 → Counter — *fm* → Voltage controlled oscillator — 21 — 27

CES clock recovery control block — 25 — Voltage control — DAC — 26 — Slave unit

**Description**

The present invention relates to a method of and an apparatus for recovering a reference clock. For example, such a method and apparatus may be used in the emulation of a time division multiplexed (TDM) circuit across a packet network, such as an Ethernet, an ATM network or an IP network.

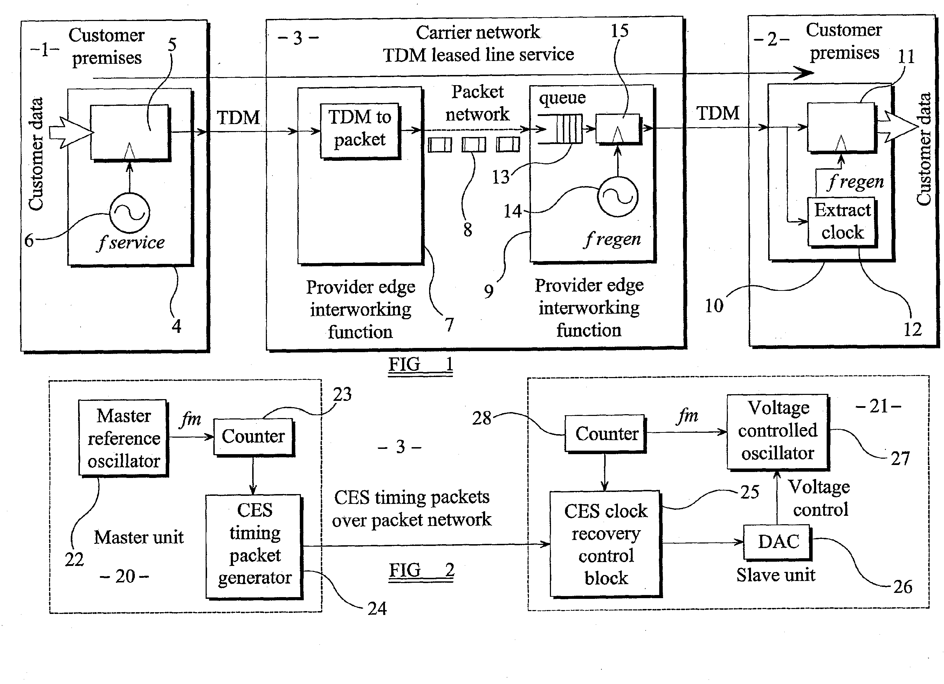

Figure 1 of the accompanying drawings illustrates a known circuit emulation arrangement used to support the provision of leased line services to customers using legacy TDM equipment. The service is provided between a first customer premises 1 and a second customer premises 2 and the connection is provided via a packet switched carrier network 3.

The premises 1 is the transmitting or sending end of the connection and comprises an apparatus 4 which contains a circuit 5 controlled by a "master" clock 6. The circuit 5 receives customer data for transmission and organises this as a TDM transmission to the network 3.

The TDM link is a synchronous circuit with a constant bit rate governed by the service clock frequency $f_{service}$ of the master clock 6. The TDM link is connected to an arrangement 7 of the network 3 performing a provider edge interworking function. In particular, the circuit 7 converts the TDM data to data packets such as 8 and the packets are transmitted across the network 3 in accordance with the protocol of the network.

A further apparatus 9 is provided at the receiving end of the network to perform conversion of the packets to a TDM link for the premises 2. The regenerated TDM signals are then supplied to an apparatus 10 comprising an arrangement 11 for recovering the customer data controlled by a clock extraction circuit 12 supplying clock signals $f_{regen}$, which are required to reproduce exactly the service clock frequency $f_{service}$.

The apparatus 9 comprises a queue 13 which receives and queues the packets received over the packet switched network. A clock 14 supplies a clock signal at a frequency $f_{regen}$ to a circuit 15, which effectively controls the reconstituting of the TDM signals.

In order for such an arrangement to operate correctly, it is essential for the regenerated clock frequency to match the master clock frequency in the apparatus 4. However, packet switched networks have no synchronisation between nodes so that the connection between the TDM ingress and egress frequencies is broken. The consequence of any long-term mismatch in frequency is that the queue 13 will fill up or empty depending on whether the regenerated clock is slower or faster than the master clock. This results in loss of data and degradation of the service.

The concept of adaptive clock recovery is known, for example from Circuit Emulation Services (CES) over ATM, ITU standard I.36.1 and ATM Forum standard AFVTOA-0078. However, details of actual techniques are not disclosed in these documents.

According to a first aspect of the invention, there is provided an apparatus for recovering a reference clock, generated by a master clock in a sender, from items of timing information sent by the sender over a network to the apparatus, comprising a controllable slave clock and a control circuit for determining each rth frequency drift between the frequencies of the master clock and the slave clock as a function of $(r{\times}m{\times}N) - C'_a(n+r{\times}m)$, where

$$C'_a(n) = \left( \sum_{i=0}^{q-1} C'(n-i) \right) / q$$

N is the number of cycles of the master clock between the sending of consecutive timing information items, C'(s) is the number of slave clock cycles between receipt of the (s-rm)th and sth timing information items from the network, m is an integer greater than zero, q is an integer greater than one, and r is a non-negative integer representing the order of the drift determinations, and for controlling the slave clock so as to reduce the error.

The network may be a non-synchronous network, such as a packet switching network with each timing information item being a packet.

q may be less than or equal to m.

The slave clock may be a voltage controlled oscillator.

The control circuit may be arranged to adjust the frequency of the slave clock after each drift determination by:

$$x[(r{\times}m{\times}N) - C'_a(n+r{\times}m)]$$

where x is a parameter determining the rate of drift compensation.

According to a second aspect of the invention, there is provided a method of recovering a reference clock, generated by a master clock in a sender, from items of timing information sent by the sender over a network, comprising:

determining each rth frequency drift between the frequencies of the master clock and a slave clock as a function of $(r \times m \times N) - C'_a (n + r \times m)$, where

$$C'_a(n) = \left( \sum_{i=0}^{q-1} C'(n-i) \right) / q$$

N is the number of cycles of the master clock between the sending of consecutive timing information items, C'(s) is the number of slave clock cycles between receipt of the (s-rm)th and sth timing information items from the network, m is an integer greater than zero, q is an integer greater than one; and r is a non-negative integer representing the order of the drift determination; and controlling a slave clock so as to reduce the error.

It is thus possible to provide a technique which allows accurate reference clock recovery across a network such as a packet switched network. In particular, such a technique provides compensation for long term frequency drift of a master clock and/or a slave clock. Thus, such a network may be used as part of a synchronous link which eliminates or substantially reduces data loss.

The invention will be further described, by way of example, with reference to the accompanying drawings, in which:

Figure 1 is a block schematic diagram of a known arrangement for providing a TDM leased line service across a packet switched network;

Figure 2 is a block schematic diagram illustrating a method of and an apparatus for providing adaptive clock recovery constituting an embodiment of the invention;

Figure 3 illustrates the timing of generation and processing of a CES timing packet;

Figure 4 illustrates a moving gate measurement process; and

Figure 5 illustrates an accumulative moving gate frequency measurement process;

Like reference numerals refer to like parts throughout the drawings.

Figure 2 illustrates an arrangement 20 at the sending end of a TDM leased line service. The arrangement 20 may be provided in the apparatus 4 at the customer premises 1 or in the arrangement 7 as part of the network 3. Figure 2 also shows an arrangement 21 at the receiving end of the leased line service. The slave unit 21 may be provided in the circuit 9 of the network or in the apparatus 10 at the receiving premises 2.

The master unit 20 comprises a master reference oscillator 22 which forms a master clock supplying clock signals at a frequency $f_m$. The clock signals are supplied to a counter 23 which divides the clock frequency by an integer and controls the generation of CES timing packets in a generator 24. In particular, for every N cycles of the master reference clock, the generator 24 generates and sends a CES timing packet to the slave unit 21 via the packet network 3.

The received timing packets are supplied to a clock recovery control block 25 in the slave unit 21. The output of the block 25 is supplied to a digital-analog converter (DAC) 26, which supplies a control voltage to a voltage controlled oscillator 27 acting as the slave clock whose frequency $f_s$ is to be synchronised to the master clock frequency $f_m$. The output of the oscillator 27 is supplied to a counter 28, which supplies a "tick" count to the block 25.

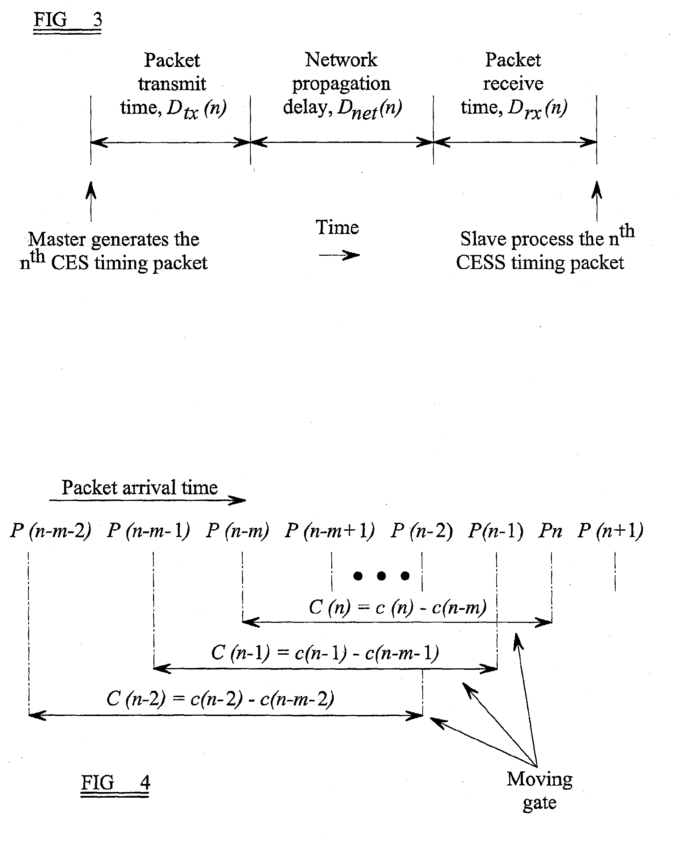

The slave unit performs a packet receive event for every CES timing packet received and records the current value of the tick count driven by the voltage controlled oscillator 27. The accumulated voltage controlled clock tick recorded for the nth CES timing packet, $P_n$, is referred as c (n). Figure 3 shows the timing of the generation and processing of the CES timing packet by the master and slave units 20 and 21.

When the nth CES timing packet, $P_n$, is received by the slave unit 21 and the number of CES timing packets received is more than m since the adaptive clock system was initialised, the accumulated voltage controlled clock ticks between the arrival times of $P_n$ and $P_{(n-m)}$ is equal to:

$$C(n) = c(n) - c(n - m) \tag{1}$$

By taking into account the system operation latency variations and network latency variations under real operation conditions, C(n) can be expressed as:

$$C(n)= (m \times N) + \Delta D_{sys}(n) + \Delta D_{net}(n) - E_c(n) \qquad (2)$$

where:

$(m \times N)$ is the number of master reference clock cycles or ticks between the transmission times of $P_n$ and $P_{(n-m)}$, $\Delta D_{sys}(n) = D_{sys}(n) - D_{sys}(n-m) = [D_{tx}(n) + D_{rx}(n)] - [D_{tx}(n - m) + D_{rx}(n - m)]$, which is the variation in voltage controlled clock ticks caused by any system operation latency including time variations for transmitting and receiving network packets,

$$\Delta D_{net}(n) = D_{net}(n) - D_{net}(n - m),$$

which is the variation in voltage controlled clock ticks caused by any packet traffic latency present in the network, and $E_c(n)$ is the frequency error in voltage controlled clock ticks corresponding to the frequency differences between the master reference clock and the voltage controlled clock.

Figure 4 illustrates the concept of a moving gate measurement. An average voltage controlled clock tick count for q consecutive moving gate measurements, $C_a(n)$, is calculated as follows:

$$C_a(n) = \left( \frac{\displaystyle\sum_{i=0}^{q-1} C(n-i)}{q} \right) \qquad (3)$$

$$C_a(n) = \left( \frac{\displaystyle\sum_{i=0}^{q-1} \left[ (m \times N) + \Delta D_{sys}(n-i) + \Delta D_{net}(n-i) - E_c(n-i) \right]}{q} \right) \qquad (4)$$

Each C(n) is determined from the arrival times of two CES timing packets, $P_n$ and $P_{n-m}$. The packet arrival time information of any CES timing packet should not be used more than once in the calculation of $C_a(n)$. Otherwise, duplicated timing information is included in the average calculation and can lead to a less accurate result. This can be avoided by setting q to less than or equal to m.

The variation of the frequency differences between the master reference clock and the voltage controlled clock is insignificant over the measurement period of $C_a(n)$, thus, $E_c(n) = E_c(n-1) = E_c(n-2)$ and so on. Therefore, $C_a(n)$ can be re-expressed as follows:

$$C_a(n) = \left( (m \times N) - E_c(n) + \frac{\displaystyle\sum_{i=0}^{q-1} \Delta D_{sys}(n-i)}{q} + \frac{\displaystyle\sum_{i=0}^{q-1} \Delta D_{net}(n-i)}{q} \right) \qquad (5)$$

Both system operation latency variations and network latency variations for the specific CES timing packet size are random. If sufficient timing samples are collected, then:

$$\frac{\sum_{i=0}^{q-1} \Delta D_{sys}(n-i)}{q} \rightarrow 0$$

$$\frac{\sum_{i=0}^{q-1} \Delta D_{net}(n-i)}{q} \rightarrow 0$$

Hence,

$$C_a(n) \cong (m \times N) - E_c(n) \tag{6}$$

$$E_c(n) \cong (m \times N) - C_a(n) \tag{7}$$

Both $\Delta D_{sys}(n)$ and $\Delta D_{net}(n)$ are independent of m, N and q. This means that the greater the values of variables m, N and q are set to, the better the frequency measurement results which will be produced.

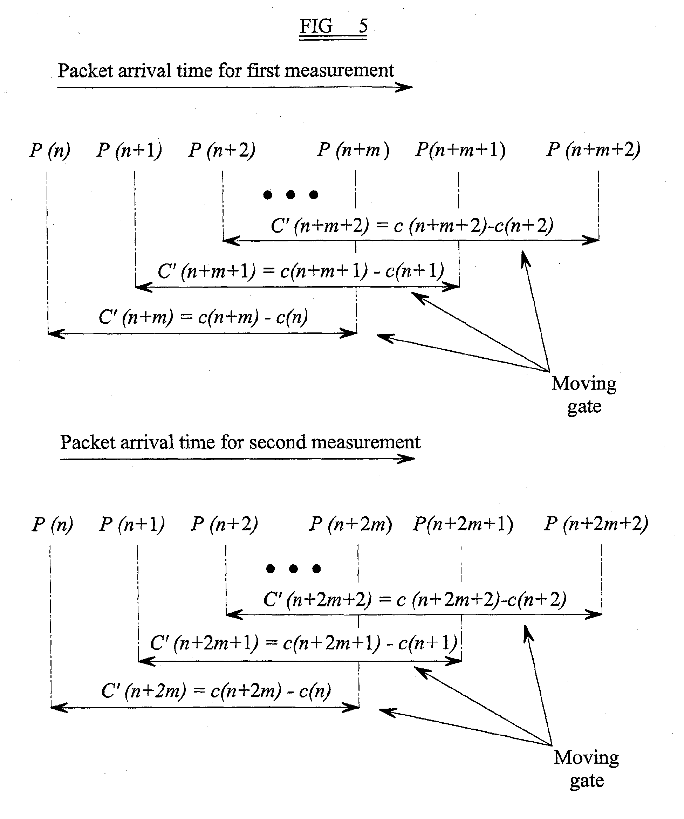

Figure 5 illustrates the concept of accumulative moving gate measurements. The start of each gate $P_{(n)}$, $P_{(n+1)}$, $P_{(n+2)}$..., is fixed whereas the end of gate is extended by m packet arrivals between each pair of consecutive measurements.

Using equations (3) and (6):

$$C'_a(n) = \left( \frac{\sum_{i=0}^{q-1} C'_a(n-i)}{q} \right) \tag{8}$$

For a first measurement, $C'_a(n) \cong (m \times N) - E'_c(n)$.
For a second measurement, $C'_a(n+m) \cong (2m \times N) - E'_c(n+m)$.
For a third measurement, $C'_a(n+2m) \cong (3m \times N) - E'_c(n + 2m)$.
For an rth measurement, $C'_a(n+r \times m) \cong (r \times m \times N) - E'_c(n+(r-1) \times m)$.

where $E'_c(n)$ is the accumulative average voltage controlled clock error count measured at the arrival of packet n since the start of the accumulative moving gate. Long term error or frequency drift is compensated by correcting the slave clock frequency on the basis of these error values.

The accumulative moving gate technique is designed to compensate long-term clock drift and should be used in conjunction with another clock recovery algorithm which can handle short-term clock drift, such as the technique disclosed in British patent application No. 0218103.0, the contents of which are incorporated herein by reference.

The accumulative moving gate may be activated after the short-term clock recovery algorithm has achieved a reasonable accuracy. This means that, at the first measurement:

$$C^1_a(n) \cong (m \times N) - E^1_c(n)$$

where $E'_c(n) \cong 0$ or is within an acceptable range.

At the rth measurement, $C'_a(n + r \times m) \cong (r \times m \times N) - E'_c(n+(r-1) \times m)$, where $E'_c(n+(r-1) \times m)$ is a measure of long-term clock drift over $(r \times m)$ master packet periods.

In an illustrative example of this technique, the master clock frequency $f_m$ = 2048000Hz. The master unit 20 sends one CES timing packet to the slave unit 21 every one second so that $N$ = 2048000. Also, $m$ = 10, $q$ = 2, and the arrival times for the 1st, 2nd, 11th and 12th packets are 2048005, 4096009, 22528055 and 24576060, respectively, so that:

$$E'_c(n) \cong (m \times N) - C'_a(n)$$

$$= (10 \times 2048000) - (24576060 - 4096009 + 22528055 - 2048005)/2$$

$$= -50.5$$

If the arrival times for the 21st and 22nd packets are 43008189 and 45056242, respectively, then:

$$E'_c(n+m) \cong (2m \times N) - C'_a(n+m)$$

$$= (20 \times 2048000) - (43008189 - 4096009 + 45056242 - 2048005)/2$$

$$= -208.5$$

The overall clock drift between the 1st and the 22nd packets is therefore -208.5 clock cycles.

If a long-term clock drift $E'_c(\tau)$ is detected at time, $t$, a frequency adjustment $\Delta f_{vco} = x \times E'_c(\tau)$ can be applied to compensate the clock drift. The value of $x$ determines the rate of compensation for the detected long-term clock drift. In general, it is desirable to compensate long-term clock drift over a reasonably long period rather than introducing rapid changes that may interfere with the short-term clock recovery algorithm running in parallel. A typical frequency adjustment rate would be 5 times or more slower than the short-term clock recovery algorithm.

When using the present technique, it is possible to switch off the short-term clock recovery algorithm running in parallel once the master and slave clocks are converged. This is, however, only possible if the master clock has very slow drift characteristic and high stability.

**Claims**

1. An apparatus for recovering a reference clock ($f_m$), generated by a master clock (22) in a sender (20), from items of timing information sent by the sender (20) over a network (3) to the apparatus, **characterised by** comprising a controllable slave clock (27) and a control circuit (25) for determining each rth frequency drift between the frequencies ($f_m$, $f_s$) of the master clock (22) and the slave clock (27) as a function of $(r \times m \times N) - C'_a(n+r \times m)$, where

$$C'_a(n) = \left( \sum_{i=0}^{q-1} C'(n-i) \right) / q$$

N is the number of cycles of the master clock (22) between the sending of consecutive timing information items, C'(s) is the number of slave clock cycles between receipt of the (s-rm)th and sth timing information items from the network (3), m is an integer greater than zero, q is an integer greater than one, and r is a non-negative integer representing the order of the drift determinations, and for controlling the slave clock (27) so as to reduce the drift.

2. An apparatus as claimed in claim 1, **characterised in that** the network (3) is a non-synchronous network.

3. An apparatus as claimed in claim 2, **characterised in that** the network (3) is a packet switching network and each timing information item is a packet.

4. An apparatus as claimed in any one of the preceding claims, **characterised in that** q ≤ m.

5. An apparatus as claimed in any one of the preceding claims, **characterised in that** the slave clock (27) is a voltage controlled oscillator.

6. An apparatus as claimed in any one of the preceding claims, **characterised in that** the control circuit (25) is arranged to adjust the frequency of the slave clock (27) after each drift determination by:

$$x[(r \times m \times N) - C'_a(n + r \times m)]$$

where $x$ is a parameter determining a rate of drift compensation.

7. A method of recovering a reference clock ($f_m$), generated by a master clock (22) in a sender (20), from items of timing information sent by the sender (20) over a network (3), comprising: determining each rth frequency drift between the frequencies ($f_m$, $f_s$) of the master clock (22) and a slave clock (27) as a function of $(r \times m \times N) - C'_a(n + r \times m)$, where

$$C'_a(n) = \left( \sum_{i=0}^{q-1} C'(n-i) \right) / q$$

N is the number of cycles of the master clock (22) between the sending of consecutive timing information items, C'(s) is the number of slave clock cycles between receipt of the (s-rm)th and sth timing information items from the network (3), m is an integer greater than zero, q is an integer greater than one; and r is a non-negative integer representing the order of the drift determination; and controlling the slave clock (27) so as to reduce the drift.

EP 1 432 161 A2

**Customer premises** -1-

Customer data

-1- Customer premises 5

6 f service

4

TDM

**Carrier network TDM leased line service** -3-

-3-

TDM to packet

Packet network

8

queue

15

13

14 f regen

Provider edge interworking function 7

Provider edge interworking function

9

TDM

**Customer premises** -2-

-2- Customer premises 11

f regen

Extract clock

10

12

Customer data

FIG 1

Master reference oscillator

22

Master unit

-20-

fm

Counter 23

CES timing packet generator

24

-3-

CES timing packets over packet network

FIG 2

28 Counter

fm

CES clock recovery control block

25

DAC

Slave unit

26

Voltage controlled oscillator

-21-

27

Voltage control

8

FIG 3

| Packet transmit time, $D_{tx}(n)$ | Network propagation delay, $D_{net}(n)$ | Packet receive time, $D_{rx}(n)$ |

Master generates the $n^{th}$ CES timing packet

Time $\longrightarrow$

Slave process the $n^{th}$ CESS timing packet

Packet arrival time $\longrightarrow$

$P(n-m-2)$   $P(n-m-1)$   $P(n-m)$   $P(n-m+1)$   $P(n-2)$   $P(n-1)$   $Pn$   $P(n+1)$

$\bullet \bullet \bullet$

$C(n) = c(n) - c(n-m)$

$C(n-1) = c(n-1) - c(n-m-1)$

$C(n-2) = c(n-2) - c(n-m-2)$

FIG 4

Moving gate

## FIG 5

Packet arrival time for first measurement →

$P(n)$    $P(n+1)$    $P(n+2)$        $P(n+m)$    $P(n+m+1)$        $P(n+m+2)$

• • •

$C'(n+m+2) = c(n+m+2) - c(n+2)$

$C'(n+m+1) = c(n+m+1) - c(n+1)$

$C'(n+m) = c(n+m) - c(n)$

Moving gate

Packet arrival time for second measurement →

$P(n)$    $P(n+1)$    $P(n+2)$        $P(n+2m)$    $P(n+2m+1)$        $P(n+2m+2)$

• • •

$C'(n+2m+2) = c(n+2m+2) - c(n+2)$

$C'(n+2m+1) = c(n+2m+1) - c(n+1)$

$C'(n+2m) = c(n+2m) - c(n)$

Moving gate